# EUROPEAN PATENT APPLICATION

(11) **EP 4 230 360 A1**
(43) Date of publication of application: **23.08.2023**
(21) Application number: 21882480.3
(22) Date of filing: 14.09.2021
(51) Int. Cl.: B25J 9/22

(54) **MOVEMENT PLANNING DEVICE, MOVEMENT PLANNING METHOD, AND MOVEMENT PLANNING PROGRAM**

(30) Priority: 19.10.2020 JP 2020175670
(71) Applicant: OMRON Corporation, Kyoto 600-8530 (JP)
(72) Inventor: VON DRIGALSKI, Felix Wolf Hans Erich, Tokyo 113-0033 (JP); YONETANI, Ryo, Tokyo 113-0033 (JP); KAROLY, Istvan Artur, Tokyo 113-0033 (JP)
(74) Representative: Becker, Eberhard
(86) International application number: PCT/JP2021/033717
(87) International publication number: WO 2022/085339

(57) **Abstract**

Provided is a technique for generating a movement plan rapidly and at a relatively light memory load, even for a complicated task, while guaranteeing executability in a real environment. A movement planning device according to one aspect of the present invention uses a symbolic planner to generate an abstract action sequence including one or more abstract actions that are arranged in the order of execution. The movement planning device: uses a motion planner to generate, from each abstract action and in the order of execution, a sequence of movements; and determines whether the generated sequence of movements can be physically executed by a robot device in the real environment.

## Description

### [Technical Field]

The present invention relates to a movement planning device, a movement planning method, and a movement planning program for planning movements of a robot device.

### [Background Art]

For example, various types of robot devices are used to perform various tasks such as assembling products. Elements such as mechanisms of a robot device, end effectors, and objects (workpieces, tools, obstacles, and the like) have many variations according to an environment in which a task is to be performed, and it is difficult to manually program movement procedures of the robot device corresponding to all of them to instruct the robot device to perform a target task. In particular, when a task becomes more complicated, it is not realistic to program all of the movement procedures. For this reason, a method of directly giving an instruction for a task to be performed while recording postures in a series of movements to be executed by determining elements such as mechanisms, end effectors, objects, and the like and then manually moving a robot device itself may be adopted.

However, in this method, there is a possibility that the movement procedure for performing a task will change every time an element is changed, and a robot device is given an instruction for the movement procedure again. For this reason, a load on movement planning associated with the change in the task becomes high.

Consequently, various methods of automating a movement plan for performing a task have been attempted. Classical planning is known as an example of an automatic planning method. Classical planning is a method of abstracting a task environment and generating a plan of a series of actions (for example, grabbing, carrying, and the like) for changing states from a start state to a target state. In addition, Moveit Task Constructor (Non-Patent Literature 1) is known as an example of a tool. According to the Moveit Task Constructor, by manually defining a sequence of actions, it is possible to automatically generate an instruction for a movement to be given to a robot device which is capable of being executed in a real environment.

### [Citation List]

### [Non-Patent Literature]

### [Non-Patent Literature 1]

"Moveit Task Constructor-moveit_tutorials Melodic documentation", [online], [retrieved on October 19, 2020], Internet <URL: https://ros-planning.github.io/moveit_tutorials/doc/moveit_task_constructor/moveit_task_constructo r_tutorial.html>

### [Summary of Invention]

### [Technical Problem]

The inventors of the present invention have found that the above-mentioned automatic planning method of the related art has the following problems. That is, according to classical planning, even for a complicated task, a series of actions (solutions) for performing the task can be generated at high speed with a relatively low memory load. In addition, the solutions can be dynamically obtained even when a user (operator) does not define a sequence of actions. However, classical planning is merely a simple simulation in which a task environment is simplified, and does not take the real environment such as specifications of a robot device, the arrangement of objects, and restrictions of a workspace into consideration. For this reason, it is unclear whether each action obtained by classical planning is executable in the real environment. On the other hand, according to Moveit Task Constructor, it is possible to automatically generate instructions for movements that are executable in the real environment. However, it takes time and effort for a user to manually define a sequence of actions. In particular, in a case where a robot device performs a complicated task, a burden on a user is increased. In addition, all movements to be attempted are held in a memory, and thus a load on the memory is increased.

In one aspect, the present invention has been made in view of such circumstances, and an object thereof is to provide a technique for generating a movement plan at high speed with a relatively low memory load even for a complicated task while ensuring executability in a real environment.

### [Solution to Problem]

The present invention adopts the following configurations in order to solve the above-described problems.

That is, a movement planning device according to an aspect of the present invention includes an information acquisition part configured to acquire task information including information on a start state and a target state of a task given to a robot device, an action generation part configured to generate an abstract action sequence including one or more abstract actions arranged in an order of execution so as to reach the target state from the start state based on the task information by using a symbolic planner, a movement generation part configured to generate a movement sequence including one or more physical actions for performing the abstract actions included in the abstract action sequence in the order of execution and to determine whether the generated movement sequence is physically executable in a real environment by the robot device by using a motion planner, and an output part configured to output a movement group which includes one or more movement sequences generated using the motion planner and in which all of the movement sequences that are included are determined to be physically executable, in which, in a case where it is determined that the movement sequences are physically inexecutable, the movement generation part is configured to discard an abstract movement sequence after the abstract action corresponding to the movement sequence determined to be physically inexecutable, and the action generation part is configured to generate a new abstract action sequence after the action by using the symbolic planner.

The movement planning device according to this configuration generates a movement plan for the robot device by using two planners, that is, the symbolic planner and the motion planner. First, in this configuration, an abstract action sequence (that is, an abstract action plan) from the start state to the target state of the task is generated by using the symbolic planner. In one example, the abstract action is a set of arbitrary movements including one or more movements of the robot device, and may be defined as a set of movements that can be expressed by symbols (for example, words or the like). That is, at the stage using the symbolic planner, an abstract action plan for performing the task is generated by simplifying the environment and conditions of the task. Thereby, even for a complicated task, it is possible to generate an abstract action plan at high speed with a relatively low memory load.

Next, in this configuration, by using a motion planner, a movement sequence for performing abstract actions is generated in order of execution (that is, the abstract actions are converted into the movement sequence), and it is determined whether the generated movement sequence is physically executable by the robot device in the real environment. That is, at the stage using the motion planner, a movement group (movement plan) of the robot device is generated while simulating the movement of the robot device in the real environment within the range of the abstract action plan generated by the symbolic planner. In a case where a movement plan that is executable in the real environment cannot be generated (that is, the action plan generated by the symbolic planner is inexecutable in the real environment), a plan after the physically inexecutable action is discarded, and the processing returns to the stage using the symbolic planner to replan an abstract action sequence. Thereby, at the stage using the motion planner, it is possible to efficiently generate a movement plan within the range of the action plan of the symbolic planner while ensuring executability in the real environment.

Thus, according to this configuration, a process of generating the movement plan for the robot device is divided into two stages, that is, a stage using the symbolic planner and a stage using the motion planner, and a movement plan is generated by exchanging between the two planners. Thereby, it is possible to generate a movement plan at high speed with a relatively low memory load even for a complicated task while ensuring executability in the real environment. In a case where the movement planning device is configured to control the movement of the robot device, the movement planning device may be referred to as a "control device" for controlling the movement of the robot device.

In the movement planning device according to the aspect, the symbolic planner may include a cost estimation model trained by machine learning to estimate a cost of an abstract action. The action generation part may further be configured to generate the abstract action sequence so that the cost estimated by the cost estimation model is optimized, by using the symbolic planner. The cost may be appropriately set to be lower for a desirable action and to be higher for an action that is not desirable based on, for example, based on arbitrary indices such as a movement time, a drive amount, a failure rate (success rate) of a movement plan, and a user feedback. According to this configuration, a desirable abstract action plan is generated based on a cost by using the trained cost estimation model, and thus it is possible to make it easier to generate a more appropriate movement plan. The "cost estimation model" may also be referred to as a "heuristic model" according to the fact that the cost of each action is heuristically obtained.

The movement planning device according to the aspect may further include a data acquisition part configured to acquire a plurality of learning data sets each constituted by a combination of a training sample indicating an abstract action for training and a correct answer label indicating a true value of a cost of the abstract action for training, and a learning processing part configured to perform machine learning of the cost estimation model by using the plurality of learning data sets obtained, wherein the machine learning is configured by training the cost estimation model so that an estimated value of a cost for the abstract action for training indicated by the training sample conforms to a true value indicated by the correct answer label for each learning data set. According to this configuration, the movement planning device can generate a trained cost estimation model for generating a more appropriate movement plan. It is possible to achieve an improvement in the performance of the cost estimation model while operating the movement planning device.

In the movement planning device according to the aspect, the correct answer label may be configured to indicate a true value of a cost calculated in accordance with at least one of a period of time required to execute the movement sequence generated by the motion planner for the abstract action for training, and a drive amount of the robot device in executing the movement sequence. According to this configuration, the cost estimation model can be trained to acquire an ability to calculate a cost using at least one of the movement time and the drive amount of the robot device as an index. Thereby, it is possible to make it easier to generate an appropriate movement plan with respect to at least one of the movement time and the drive amount of the robot device.

In the movement planning device according to the aspect, the correct answer label may be configured to indicate a true value of a cost calculated in accordance with a probability that the movement sequence generated by the motion planner for the abstract action for training will be determined to be physically inexecutable. According to this configuration, the cost estimation model can be trained to acquire an ability to calculate a cost using a failure rate of the movement plan using the motion planner as an index. Thereby, it is possible to reduce the failure rate of the movement plan using the motion planner (in other words, a possibilitylikelihood that the processing will return to the stage using the symbolic planner to replan an abstract action sequence) with respect to the abstract action sequence generated by the symbolic planner. That is, it is possible to generate an abstract action plan highly executable in the real environment by the symbolic planner, thereby shortening a processing time required to obtain a final movement plan.

In the movement planning device according to the aspect, the correct answer label may be configured to indicate a true value of a cost calculated in accordance with a user's feedback for the abstract action for training. According to this configuration, the cost estimation model can be trained to acquire an ability to calculate a cost using the knowledge given by the user's feedback as an index. Thereby, it is possible to make it easier to generate a more appropriate action plan according to the feedback.

The movement planning device according to the aspect may further include an interface processing part configured to output a list of abstract actions included in an abstract action sequence generated using the symbolic planner to the user and to receive the user's feedback for the output list of the abstract actions. Additionally, the data acquisition part may further be configured to acquire the learning data set from a result of the user's feedback for the list of the abstract actions. The user's feedback may be obtained for the movement plan generated by the motion planner. However, the movement sequence included in the movement plan generated by the motion planner is defined by a physical quantity (for example, the trajectory of an end effector, or the like) associated with mechanical driving of the robot device. For this reason, the generated movement plan has a large amount of information and is less interpretable for the user (person). On the other hand, the abstract actions included in the action plan generated by the symbolic planner may be defined by, for example, a set of actions that can be represented by symbols such as words, and has a smaller amount of information and is more interpretable for the user as compared to the movement sequence defined by the physical quantity. Thus, according to this configuration, it is possible to reduce consumption of resources (for example, a display) for outputting a plan generated by the planner to the user and to make it easier to obtain the user's feedback. Thereby, it is possible to make it easier to generate and improve the trained cost estimation model for generating a more appropriate movement plan.

In the movement planning device according to the aspect, a state space of the task may be represented by a graph including edges corresponding to abstract actions and nodes corresponding to abstract attributes as targets to be changed by execution of the abstract actions, and the symbolic planner may be configured to generate the abstract action sequence by searching for a path from a start node corresponding to a start state to a target node corresponding to a target state in the graph. According to this configuration, the symbolic planner can be easily generated, and thus it is possible to reduce a burden on the construction of the movement planning device.

In the movement planning device according to the aspect, outputting the movement group may include controlling a movement of the robot device by giving an instruction indicating the movement group to the robot device. According to this configuration, it is possible to construct the movement planning device that controls the movement of the robot device in accordance with the generated movement plan. The movement planning device according to this configuration may be referred to as a "control device".

In the movement planning device according to the aspect, the robot device may include one or more robot hands, and the task may be assembling work for a product constituted by one or more parts. According to this configuration, in a scene in which the assembling work for the product is performed by the robot hands, it is possible to generate a movement plan at high speed with a relatively low memory load even for a complicated task while ensuring executability in the real environment.

As another mode of the movement planning device according to the above-described forms, one aspect of the present invention may be an information processing method, a program, or a storage medium that stores such a program and is readable by a computer, other devices, machines, or the like for realizing all or some of the above-described configurations. Here, the storage medium that can be read by a computer or the like is a medium for accumulating information such as programs by an electrical, magnetic, optical, mechanical or chemical action.

For example, a movement planning method according to an aspect of the present invention includes causing a computer to execute the following steps including acquiring task information including information on a start state and a target state of a task given to a robot device, generating an abstract action sequence including one or more abstract actions arranged in an order of execution so as to reach the target state from the start state based on the task information by using a symbolic planner, generating a movement sequence including one or more physical actions for performing the abstract actions included in the abstract action sequence in the order of execution by using a motion planner, determining whether the generated movement sequence is physically executable in a real environment by the robot device, and outputting a movement group which includes one or more movement sequences generated using the motion planner and in which all of the movement sequences that are included are determined to be physically executable. In the determining, in a case where it is determined that the movement sequence is physically inexecutable, the computer discards an abstract movement sequence after the abstract action corresponding to the movement sequence determined to be physically inexecutable, and returns to the generating of the abstract action sequence to generate a new abstract action sequence after the action by using the symbolic planner.

For example, a movement planning program according to an aspect of the present invention causes a computer to execute the following steps including acquiring task information including information on a start state and a target state of a task given to a robot device, generating an abstract action sequence including one or more abstract actions arranged in an order of execution so as to reach the target state from the start state based on the task information by using a symbolic planner, generating a movement sequence including one or more physical actions for performing the abstract actions included in the abstract action sequence in the order of execution by using a motion planner, determining whether the generated movement sequence is physically executable in a real environment by the robot device, and outputting a movement group which includes one or more movement sequences generated using the motion planner and in which all of the movement sequences that are included are determined to be physically executable. In the determining, in a case where it is determined that the movement sequence is physically inexecutable, the computer discards an abstract movement sequence after the abstract action corresponding to the movement sequence determined to be physically inexecutable, and returns to the generating of the abstract action sequence to generate a new abstract action sequence after the action by using the symbolic planner.

### [Advantageous Effects of Invention]

According to the present invention, it is possible to generate a movement plan at high speed with a relatively low memory load even for a complicated task while ensuring executability in the real environment.

### [Brief Description of Drawings]

Fig. 1 schematically illustrates an example of a scene to which the present invention is applied.
Fig. 2 schematically illustrates an example of a hardware configuration of a movement planning device according to an embodiment.
Fig. 3 schematically illustrates an example of a software configuration of the movement planning device according to the embodiment.
Fig. 4 schematically illustrates an example of a process of machine learning of a cost estimation model which is performed by the movement planning device according to the embodiment.
Fig. 5 is a flowchart illustrating an example of a processing procedure related to a movement plan of the movement planning device according to the embodiment.
Fig. 6 schematically illustrates an example of a process of generating an abstract action sequence using a symbolic planner according to the embodiment.
Fig. 7 schematically illustrates an example of an output mode of an abstract action sequence by the movement planning device according to the embodiment.
Fig. 8 schematically illustrates an example of a process of generating a movement sequence using the motion planner according to the embodiment.
Fig. 9 is a flowchart illustrating an example of a processing procedure related to machine learning of a cost estimation model which is performed by the movement planning device according to the embodiment.
Fig. 10 schematically illustrates an example of another usage mode of a cost estimation model.

### [Description of Embodiments]

Hereinafter, an embodiment according to an aspect of the present invention (hereinafter also referred to as "the present embodiment") will be described with reference to the drawings. However, the present embodiment to be described below is merely an example of the present invention in every respect. It is needless to say that various modifications and variations can be made without departing from the scope of the invention. That is, in implementing the present invention, a specific configuration according to the embodiment may be appropriately adopted. Although data appearing in the present embodiment is described in a natural language, more specifically, the data is designated by computer-recognizable pseudo-language, commands, parameters, machine language, and the like.

### § 1 Application Example

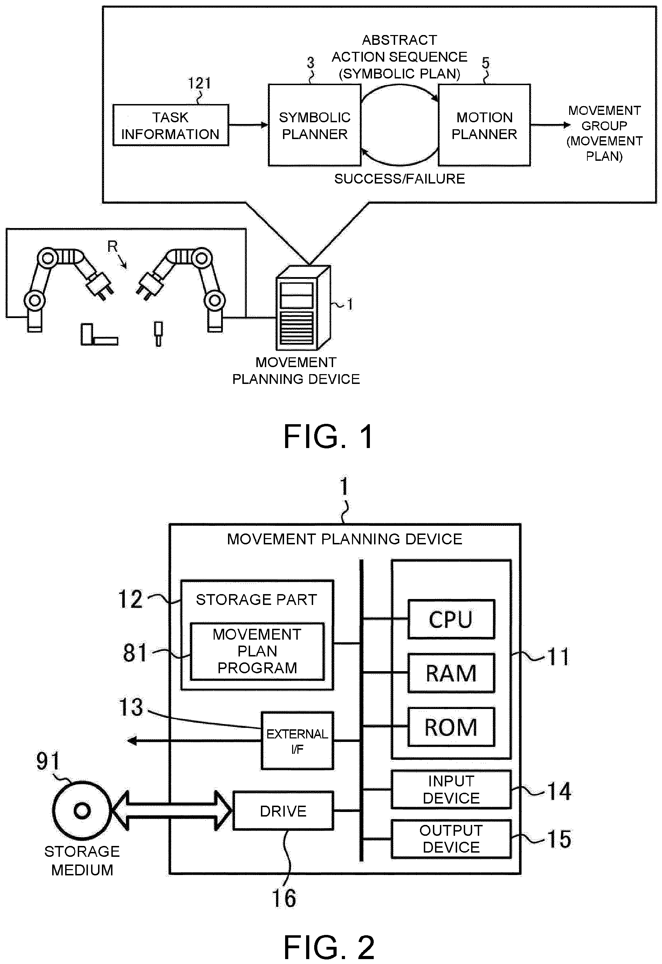

Fig. 1 schematically illustrates an example of a scene to which the present invention is applied. A movement planning device 1 according to the present embodiment is a computer configured to generate a movement plan for causing a robot device R to perform a task.

First, the movement planning device 1 acquires task information 121 including information on a start state and a target state of a task given to the robot device R. The type of the robot device R is not particularly limited and may be appropriately selected according to the embodiment. The robot device R may be, for example, an industrial robot (manipulator or the like), an automatically movable moving object, or the like. The industrial robot may be, for example, a vertically articulated robot, a SCARA robot, a parallel link robot, an orthogonal robot, a cooperative robot, or the like. The automatically movable moving object may be, for example, a drone, a vehicle configured to be able to be automatically driven, a mobile robot, or the like. The robot device R may be constituted by a plurality of robots. A task may be constituted by any work that can be performed by the robot device R, such as assembling a product. An environment in which the task is performed may be specified by objects other than the robot device R, such as workpieces (parts and the like), tools (drivers and the like), and obstacles. As an example, the robot device R may include one or more robot hands, and the task may be assembling work for a product constituted by one or more parts. In this case, it is possible to generate a movement plan for work of assembling the product by the robot hand. As long as the task information 121 includes information indicating a start state and a target state of the task, it may include other information (for example, information on the environment of the task).

Next, the movement planning device 1 generates an abstract action sequence including one or more abstract actions arranged in order of execution so as to reach a target state from a start state based on the task information 121 by using a symbolic planner 3. The abstract action sequence may be read as an abstract action plan or a symbolic plan. Subsequently, the movement planning device 1 converts the abstract actions included in the abstract action sequence into a movement sequence in order of execution of the action plan by using a motion planner 5. The movement sequence may be appropriately configured to include one or more physical movements so as to be able to achieve a target abstract action. Thereby, the movement planning device 1 generates a movement sequence for performing abstract actions in order of execution. Along with the processing for generating this movement sequence, the movement planning device 1 determines whether the generated movement sequence is physically executable in the real environment by the robot device R by using the motion planner 5.

As an example, an abstract action is a collection of arbitrary movements including one or more movements of the robot device R, and may be defined as a collection of movements that can be represented by symbols (for example, words or the like). The abstract action may be defined as a collection of meaningful (that is, human-understandable) movements such as grabbing, carrying, or positioning a part. On the other hand, the physical movement may be defined by a movement (physical quantity) associated with mechanical driving of the robot device R. The physical movement may be defined by, for example, a control amount in a control target, such as the trajectory of an end effector.

Accordingly, the start state may be defined by abstract attributes and physical states of the robot device R and an object that serve as a starting point for performing the task. The target state may be defined by abstract attributes of the robot device R and the object that serve as a target point of the task to be performed. The physical states of the robot device R and the object in the target state may or may not be designated in advance (in this case, the physical state in the target state may be appropriately determined from the abstract attributes in the target state based on, for example, an execution result of the motion planner 5, and the like). The "target" may be either a final target or an intermediate target of the task. The abstract attributes are an object that is changed by executing an abstract action. The abstract attributes may be configured to include an abstract (symbolic) state such as being free, holding a workpiece, holding a tool, being held by a robot hand, or being fixed at a predetermined location. The physical state may be defined by physical quantities in the real environment, such as position, posture, and orientation.

The symbolic planner 3 may be appropriately configured to be able to execute processing for generating an abstract action sequence from a start state to a target state when information indicating the start state and the target state is given. The symbolic planner 3 may be configured to generate an abstract action sequence by repeating processing for selecting an abstract action that is executable so as to approach the target state from the start state according to, for example, a predetermined rule such as classical planning (graph search). The motion planner 5 may be appropriately configured to be able to execute processing for generating a movement sequence for performing an abstract action and processing for determining whether the robot device R can physically execute the generated movement sequence in the real environment when information indicating at least a portion of the abstract action sequence is given. In an example, the motion planner 5 may be constituted by a converter that converts an abstract action into a movement sequence according to a predetermined rule, and a physical simulator that physically simulates the obtained movement sequence.

In a case where an abstract action plan generated by the symbolic planner 3 is inexecutable in the real environment (that is, the abstract action sequence includes an abstract action that is inexecutable in the real environment), a movement sequence generated for the abstract action to be the cause thereof is determined to be physically inexecutable in the processing of the motion planner 5. In this case, the movement planning device 1 discards an abstract action sequence after the abstract action corresponding to the movement sequence determined to be physically inexecutable. In addition, the movement planning device 1 generates a new abstract action sequence after the abstract action by using the symbolic planner 3. In other words, in a case where it is found that the abstract action sequence includes an abstract action that is inexecutable in the real environment (the generation of a movement sequence that is executable in the real environment has not been successful) in the stage of using the motion planner 5, the movement planning device 1 returns to the using of the symbolic planner 3 to plan the abstract action sequence again.

The movement planning device 1 alternately repeats the processing of the symbolic planner 3 and the motion planner 5 as described above until it is determined that all movement sequences are executable in the real environment (that is, generation of movement sequences executable in the real environment is successful for all abstract actions). Thereby, the movement planning device 1 can generate a movement group which includes one or more movement sequences and in which all of the included movement sequences are determined to be physically executable so as to reach a target state from a start state. Alternatively, in a case where an action plan executable in the real environment is generated by first using the symbolic planner 3, the movement planning device 1 can generate the movement group by executing the processing the symbolic planner 3 and the motion planner 5 once (without repeating the processing).

The generated movement group is equivalent to a movement plan for the robot device R for performing a task (that is, for reaching a target state from a start state). The movement planning device 1 outputs the movement group generated using the motion planner 5. The outputting of the movement group may include controlling the movement of the robot device R by giving the robot device R an instruction indicating the movement group. In a case where the movement planning device 1 is configured to control the movement of the robot device R, the movement planning device 1 may be read as a "control device" for controlling the movement of the robot device R.

As described above, in the present embodiment, the process of generating a movement plan for the robot device R is divided into two stages, that is, an abstract stage using the symbolic planner 3 and a physical stage using the motion planner 5, and a movement plan is generated while exchanging between the two planners (3 and 5). At the abstract stage using the symbolic planner 3, an action plan for performing a task can be generated by simplifying the environment and conditions of the task to an abstract level rather than a complicated level of the real environment. For this reason, even for a complicated task, it is possible to generate an abstract action plan (abstract action sequence) at high speed with a relatively low memory load. In the present embodiment, processing for generating a movement sequence by the motion planner 5 is configured to use a processing result of the symbolic planner 3 (that is, the processing is executed after the processing of the symbolic planner 3 is executed). Thereby, at the physical stage using the motion planner 5, it is possible to efficiently generate a movement plan within the range of the action plan of the symbolic planner 3 while ensuring executability in the real environment. Thus, according to the present embodiment, it is possible to generate a movement plan for the robot device R at high speed with a relatively low memory load even for a complicated task, while ensuring executability in the real environment.

### §2 Configuration Example

### [Hardware Configuration]

Fig. 2 schematically illustrates an example of a hardware configuration of the movement planning device 1 according to the present embodiment. As illustrated in Fig. 2, the movement planning device 1 according to the present embodiment is a computer to which a control part 11, a storage part 12, an external interface 13, an input device 14, an output device 15, and a drive 16 are electrically connected. In Fig. 2, the external interface is described as an "external I/F".

The control part 11 includes a central processing part (CPU), which is an example of a hardware processor, a random access memory (RAM), a read only memory (ROM), and the like, and is configured to be able to execute information processing based on programs and various data. The storage part 12 is an example of a memory, and is constituted by, for example, a hard disk drive, a solid state drive, or the like. In the present embodiment, the storage part 12 stores various information such as a movement planning program 81.

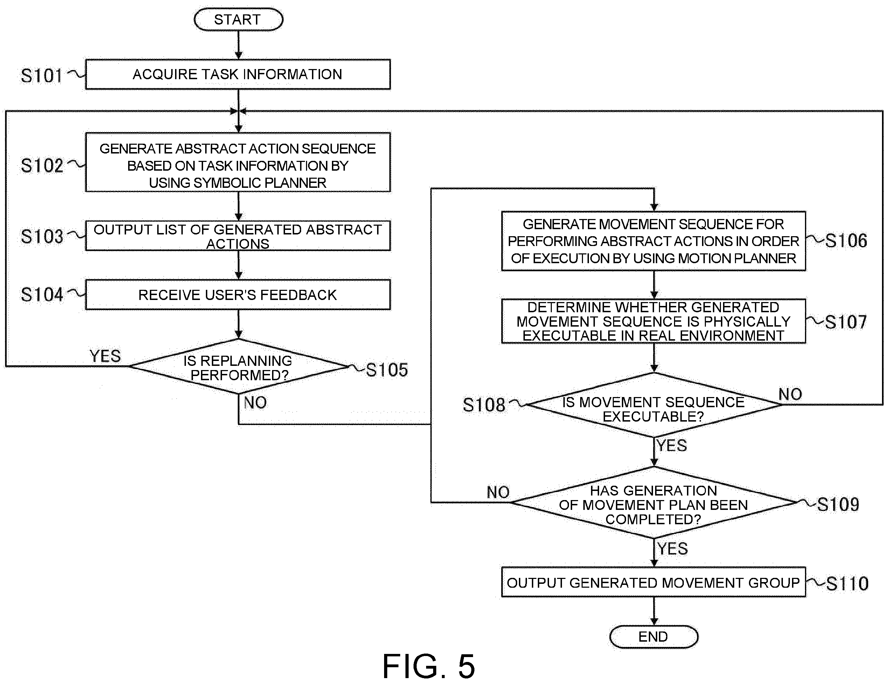

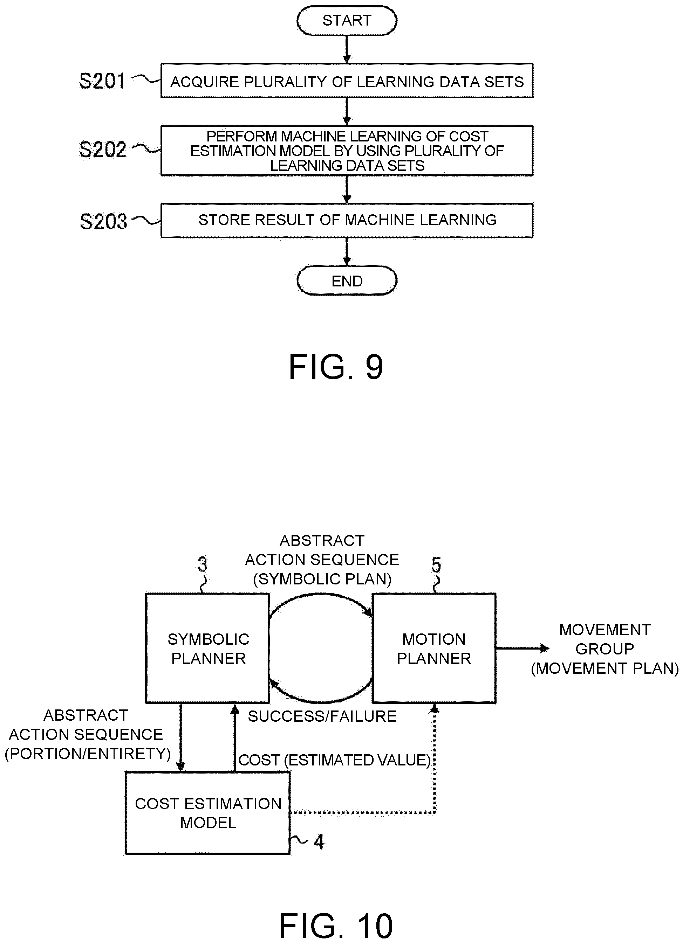

The movement planning program 81 is a program for causing the movement planning device 1 to execute information processing (Figs. 5 and 9) regarding generation of a movement plan, which will be described later. The movement planning program 81 includes a series of instructions for the information processing. Details thereof will be described later.

The external interface 13 is, for example, a universal serial bus (USB) port, a dedicated port, or the like, and is an interface for connection to an external device. The type and number of external interfaces 13 may be arbitrarily selected. In a case where the movement planning device 1 is configured to control the movement of the robot device R, the movement planning device 1 may be connected to the robot device R via the external interface 13. A method of connecting the movement planning device 1 and the robot device R is not limited to such an example, and may be appropriately selected according to the embodiment. As another example, the movement planning device 1 and the robot device R may be connected to each other via a communication interface such as a wired local area network (LAN) module, a wireless LAN module, or the like.

The input device 14 is, for example, a device for performing input such as a mouse and a keyboard. In addition, the output device 15 is, for example, a device for performing output such as a display and a speaker. An operator such as a user can operate the movement planning device 1 by using the input device 14 and the output device 15.

The drive 16 is, for example, a CD drive, a DVD drive, or the like, and is a drive device for reading various information such as programs stored in a storage medium 91. The storage medium 91 is a medium for accumulating information such as the programs by an electrical, magnetic, optical, mechanical or chemical action so that a computer, other devices, machines, and the like can read various information stored such as programs. The movement planning program 81 may be stored in the storage medium 91. The movement planning device 1 may acquire the movement planning program 81 from the storage medium 91. In Fig. 2, as an example of the storage medium 91, a disk-type storage medium such as a CD or a DVD is illustrated. However, the type of storage medium 91 is not limited to the disk type, and may be other than the disk type. As a storage medium other than the disk type, for example, a semiconductor memory such as a flash memory can be cited. The type of drive 16 may be arbitrarily selected according to the type of storage medium 91.

With respect to a specific hardware configuration of the movement planning device 1, components can be appropriately omitted, replaced, and added according to the embodiment. For example, the control part 11 may include a plurality of hardware processors. The hardware processor may be constituted by a microprocessor, a field-programmable gate array (FPGA), a digital signal processor (DSP), or the like. The storage part 12 may be constituted by a RAM and a ROM included in the control part 11. At least one of the external interface 13, the input device 14, the output device 15 and the drive 16 may be omitted. The movement planning device 1 may be constituted by a plurality of computers. In this case, hardware configurations of the respective computers may or may not match. The movement planning device 1 may be an information processing device designed exclusively for a service provided, or may be a general-purpose server device, a general-purpose personal computer (PC), a programmable logic controller (PLC), or the like.

### [Software Configuration]

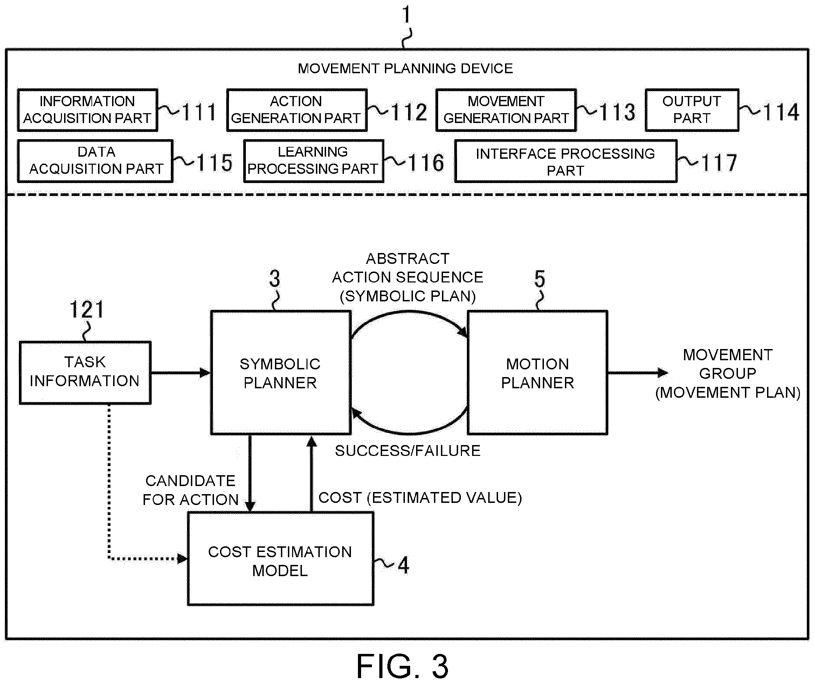

Fig. 3 schematically illustrates an example of a software configuration of the movement planning device 1 according to the present embodiment. The control part 11 of the movement planning device 1 develops the movement planning program 81 stored in the storage part 12 in the RAM. In addition, the control part 11 causes the CPU to analyze and execute commands included in the movement planning program 81 developed in the RAM to control each component. Thereby, the movement planning device 1 according to the present embodiment operates as a computer including an information acquisition part 111, an action generation part 112, a movement generation part 113, an output part 114, a data acquisition part 115, a learning processing part 116, and an interface processing part 117 as software modules. That is, in the present embodiment, each software module of the movement planning device 1 is implemented by the control part 11 (CPU).

The information acquisition part 111 is configured to acquire task information 121 including information on a start state and a target state of the task given to the robot device R. The action generation part 112 includes the symbolic planner 3. The action generation part 112 is configured to generate an abstract action sequence including one or more abstract actions arranged in order of execution so as to reach a target state from a start state based on the task information 121, by using the symbolic planner 3. The movement generation part 113 includes the motion planner 5. The movement generation part 113 is configured to generate a movement sequence including one or more physical movements for performing an abstract action included in the abstract action sequence in order of execution by using the motion planner 5 and to determine whether the generated movement sequence is physically executable in the real environment by the robot device R. A storage destination of configuration information (not illustrated) of each of the symbolic planner 3 and the motion planner 5 may not be particularly limited, and may be appropriately selected according to the embodiment. In an example, each configuration information may be included in the movement planning program 81 or may be held in a memory (the storage part 12, the storage medium 91, an external storage device, or the like) separately from the movement planning program 81.

In a case where the movement generation part 113 determines that a movement sequence is physically inexecutable, the movement planning device 1 discards an abstract action sequence after an abstract action corresponding to a movement sequence determined to be physically inexecutable, and the action generation part 112 is configured to generate a new abstract action sequence after the action by using the symbolic planner 3. The output part 114 is configured to output a movement group which includes one or more movement sequences generated using the motion planner 5 and in which all of the included movement sequences are determined to be physically executable.

The symbolic planner 3 may be appropriately configured to generate an abstract action sequence in accordance with a predetermined rule. In the present embodiment, the symbolic planner 3 may be further configured to include a cost estimation model (heuristic model) 4 trained by machine learning to estimate the cost of abstract actions. Accordingly, the action generation part 112 may further be configured to generate an abstract action sequence so that the cost estimated by the trained cost estimation model 4 is optimized, by using the symbolic planner 3.

The cost estimation model 4 may be appropriately configured to output an estimated value (that is, a result of estimation of the cost) of the cost of a candidate for an abstract action to be adopted, when the abstract action candidate is given. The abstract action candidate may be directly designated, or may be indirectly designated by a combination of candidates for the current state and the next state. In addition, information to be input to the cost estimation model 4 may not be limited to the information indicating an abstract action candidate. The cost estimation model 4 may be configured to further receive an input of other information (for example, at least a portion of the task information 121) that can be used for cost estimation, in addition to the information indicating an abstract action candidate.

The trained cost estimation model 4 may be generated by the movement planning device 1 or may be generated by a computer other than the movement planning device 1. In the present embodiment, the movement planning device 1 is configured to be able to generate the trained cost estimation model 4 and execute retraining of the cost estimation model 4 by including the data acquisition part 115 and the learning processing part 116.

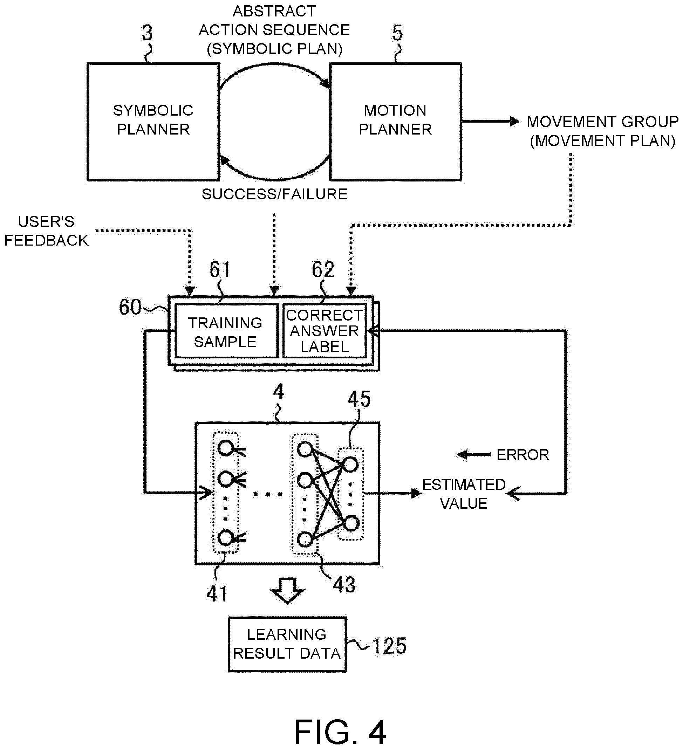

Fig. 4 schematically illustrates an example of a process of machine learning of the cost estimation model 4 according to the present embodiment. The data acquisition part 115 is configured to acquire a plurality of learning data sets 60 each constituted by a combination of a training sample 61 and a correct answer label 62. The training sample 61 may be appropriately configured to indicate an abstract action for training. In a case where the cost estimation model 4 is configured to further receive an input of other information, the training samples 61 may be configured to further include other information for training. The correct answer label 62 may be appropriately configured to indicate a true value of the cost of the abstract action for training indicated by the corresponding training sample 61.

The learning processing part 116 is configured to perform machine learning of the cost estimation model 4 by using the acquired plurality of learning data sets 60. For each learning data set 60, machine learning is configured to train the cost estimation model 4 so that an estimated value of the cost for the abstract action for training indicated by the training sample 61 conforms to a true value indicated by the corresponding correct answer label 62.

The cost may be appropriately set to be lower for a recommended action and to be higher for an action that is not recommended, for example, arbitrary indices such as a movement time, a drive amount, a failure rate of a movement plan, and a user feedback. Numerical representation of the cost may be set appropriately. In one example, the cost may be expressed to be proportional to a numerical value (that is, the greater the numerical value, the higher the cost). In another example, the cost may be expressed to be inversely proportional to a numerical value (that is, the smaller the numerical value, the higher the cost).

A period of time required to execute a movement sequence (movement time) and a drive amount of the robot device R in executing the movement sequence can be evaluated from a movement plan obtained to perform a task. For this reason, in a case where at least one of the movement time and the drive amount is used as a cost evaluation index, each learning data set 60 may be acquired from a movement group generation result using the motion planner 5.

The failure rate of the movement plan (that is, a probability that a movement sequence generated by the motion planner 5 for an abstract action is determined to be physically inexecutable) can be evaluated by executing the processing of the motion planner 5 for an abstract action sequence obtained by the symbolic planner 3. For this reason, in a case where the failure rate of the movement plan is used as a cost evaluation index, each learning data set 60 may be acquired from a result of execution of the processing of the motion planner 5 for the abstract action sequence obtained by the symbolic planner 3. A success rate of a movement plan (that is, a probability that a movement sequence generated by the motion planner 5 for an abstract action is determined to be physically executable) can be treated as a cost evaluation index in the same manner as the failure rate. Thus, evaluating the cost in accordance with the failure rate of the movement plan may include evaluating the cost in accordance with the success rate of the movement plan. The failure rate (success rate) may not necessarily be expressed in the range of 0 to 1. As another example, the failure rate may be expressed as a binary value of a success (zero cost) and a failure (infinite cost) in a movement plan.

In a case where a user's feedback is used as a cost evaluation index, each learning data set 60 may be appropriately acquired from results of feedbacks obtained from the user. A timing and format of the feedback may not be particularly limited, and may be appropriately determined according to the embodiment. In the present embodiment, the interface processing part 117 can acquire the user's feedback. That is, the interface processing part 117 is configured to output a list of abstract actions included in the abstract action sequence generated using the symbolic planner 3 to the user and to receive the user's feedback for the output list of the abstract actions. Each learning data set 60 may be acquired from results of the user's feedback for the list of the abstract actions.

Even when any evaluation index is adopted, a timing when the learning data set 60 is collected may not be particularly limited, and may be appropriately determined according to the embodiment. All of the learning data sets 60 may be collected before the movement planning device 1 is operated. Alternatively, at least some of the plurality of learning data sets 60 may be collected while operating the movement planning device 1.

### (Cost Estimation Model)

The cost estimation model 4 may be appropriately constituted by a machine learning model having operation parameters that can be adjusted by machine learning. The configuration and type of the machine learning model may be appropriately selected according to the embodiment.

As an example, the cost estimation model 4 may be constituted by a fully connected neural network. In the example of Fig. 4, the cost estimation model 4 includes an input layer 41, one or more intermediate (hidden) layers 43, and an output layer 45. The number of intermediate layers 43 may be appropriately selected according to the embodiment. In another example, the intermediate layer 43 may be omitted. The number of layers of the neural network constituting the cost estimation model 4 may be appropriately selected according to the embodiment.

The layers (41, 43, 45) include one or more neurons (nodes). The number of neurons included in each layer (41, 43, 45) may be appropriately determined according to the embodiment. The number of neurons in the input layer 41 may be appropriately determined according to an input mode such as the number of dimensions of an input. The number of neurons in the output layer 45 may be appropriately determined according to an output form such as the number of dimensions of an output. In the example of Fig. 4, each neuron included in each layer (41, 43, 45) is coupled to all neurons of adjacent layers.

However, the structure of the cost estimation model 4 may not be limited to such an example, and may be appropriately determined according to the embodiment. As another example, in a case where the cost estimation model 4 is configured to estimate a cost based on a plurality of types of information, at least a portion of an input side of the cost estimation model 4 may be divided into a plurality of modules so as to separately receive inputs of the types of information. As an example of a specific configuration, the cost estimation model 4 may include a plurality of feature extraction modules disposed in parallel on the input side so as to receive an input of the corresponding information, and a coupling module disposed on the output side so as to receive an output of each of the feature extraction module. The feature extraction module may be appropriately configured to extract a feature amount from the corresponding information. The coupling module may be appropriately configured to combine feature amounts extracted from the pieces of information by the feature extraction modules and to output an estimated value of a cost.

A weight (connection weight) is set for each coupling of each layer (41, 43, 45). A threshold value is set for each neuron, and basically the output of each neuron is determined depending on whether the sum of products of each input and each weight exceeds the threshold value. The threshold value may be expressed by an activation function. In this case, the output of each neuron is determined by inputting the sum of products of each input and each weight to the activation function and executing the arithmetic operation of the activation function. The type of activation function may be selected arbitrarily. The weight of the coupling between neurons included in each layer (41, 43, 45) and a threshold value of each neuron are examples of arithmetic operation parameters.

In the machine learning of the cost estimation model 4, the learning processing part 116 uses the training sample 61 of each learning data set 60 as training data (input data) and uses the correct answer label 62 as correct answer data (teacher signal). That is, the learning processing part 116 inputs the training sample 61 of each learning data set 60 to the input layer 41 and executes forward propagation arithmetic operation processing of the cost estimation model 4. Through this arithmetic operation, the learning processing part 116 acquires an estimated value of a cost for an abstract action for training from the output layer 45. The learning processing part 116 calculates an error between the obtained estimated cost value and a true value (correct answer) indicated by the correct answer label 62 associated with the input training sample 61. The learning processing part 116 repeatedly adjusts the values of the arithmetic operation parameters of the cost estimation model 4 so that the calculated error becomes small for each learning data set 60. Thereby, a trained cost estimation model 4 can be generated.

The learning processing part 116 may be configured to generate learning result data 125 for reproducing the trained cost estimation model 4 generated by the machine learning. The configuration of the learning result data 125 may not be particularly limited as long as the trained cost estimation model 4 can be reproduced, and may be appropriately determined according to the embodiment. In one example, the learning result data 125 may include information indicating the values of the arithmetic operation parameters of the cost estimation model 4 obtained by adjusting the machine learning. Depending on a case, the learning result data 125 may further include information indicating the structure of the cost estimation model 4. The structure of the cost estimation model 4 may be specified by, for example, the number of layers from the input layer to the output layer in the neural network, the type of each layer, the number of neurons included in each layer, a coupling relationship between neurons in adjacent layers, and the like. The learning processing part 116 may be configured to store the generated learning result data 125 in a predetermined storage region.

### (Others)

Each software module of the movement planning device 1 will be described in detail in a movement example to be described later. In the present embodiment, an example in which each software module of the movement planning device 1 is implemented by a general-purpose CPU is described. However, some or all of the software modules may be implemented by one or a plurality of dedicated processors. Each module described above may be implemented as a hardware module. Further, with respect to the software configuration of the movement planning device 1, software modules may be appropriately omitted, replaced, and added according to the embodiment.

### §3 Movement Example

### (1) Movement Plan

Fig. 5 is a flowchart illustrating an example of a processing procedure related to a movement plan which is performed by the movement planning device 1 according to the present embodiment. The processing procedure related to a movement plan to be described below is an example of a movement planning method. However, the processing procedure related to a movement plan to be described below is merely an example, and each step may be changed as much as possible. With respect to the processing procedure related to a movement plan to be described below, steps may be appropriately omitted, replaced, and added according to the embodiment.

### (Step S101)

In step S101, the control part 11 operates as the information acquisition part 111 and acquires task information 121 including information on a start state and a target state of a task to be given to the robot device R.

A method of acquiring the task information 121 is not particularly limited, and may be appropriately selected according to the embodiment. In one example, the task information 121 may be acquired as a user's input result via the input device 14. In another example, the task information 121 may be acquired as a result of observing the start state and the target state of the task using a sensor such as a camera. A data format of the task information 121 is not particularly limited as long as the start state and the target state can be specified, and may be appropriately selected according to the embodiment. The task information 121 may be constituted by, for example, numerical data, text data, image data, and the like. In order to specify a task, a start state may be designated appropriately for each of an abstract state and a physical stage. The target state may be appropriately designated for at least the abstract stage out of the abstract stage and the physical stage. The task information 121 may further include other information that can be used to generate an abstract action sequence or a movement group, in addition to information indicating each of the start state and the target state. When the task information 121 is acquired, the control part 11 causes the processing to proceed to the next step S102.

### (Step S102)

In step S102, the control part 11 operates as the action generation part 112, and performs planning for an abstract action so as to reach a target state from a start state with reference to the task information 121 and by using the symbolic planner 3. Thereby, the control part 11 generates an abstract action sequence including one or more abstract actions arranged in order of execution so as to reach the target state from the start state, based on the task information 121.

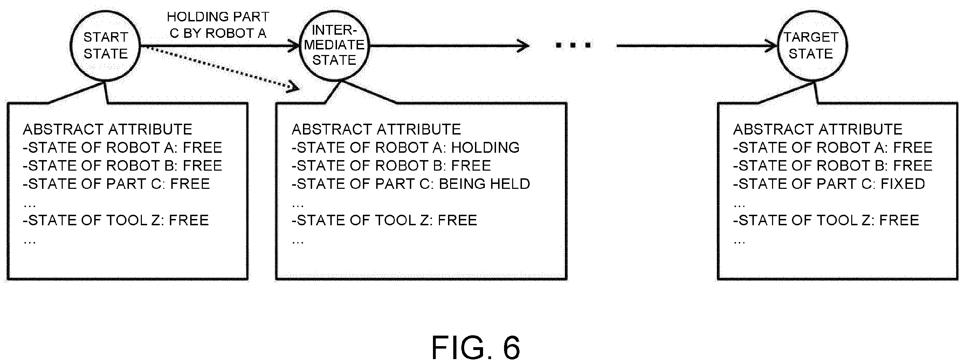

Fig. 6 schematically illustrates an example of a processing of generating an abstract action sequence using the symbolic planner 3 according to the present embodiment. A state space of a task at an abstract stage may be expressed by a graph including edges corresponding to an abstract action and nodes corresponding to target abstract attributes changed by execution of the abstract action. In other words, the state space involved in the symbolic planner 3 may be constituted by a set of abstract attributes (states) that change according to the abstract action. Accordingly, the symbolic planner 3 may be configured to generate an abstract action sequence by searching for a path in a graph from a start node corresponding to the start state to a target node corresponding to the target state. Thereby, the symbolic planner 3 can be easily generated, and consequently, a burden on construction of the movement planning device 1 can be reduced. Abstract attributes given to the start node corresponding to the start state is an example of information indicating the start state at the abstract stage.

The abstract attributes may be appropriately set to include abstract states of the robot device R and an object. An example in Fig. 6 shows a scene in which at least two robot hands (robot A and robot B), one or more parts (part C), and one or more tools (tool Z) are provided, and an abstract action sequence for a task including work for fixing the part C in a predetermined place is generated. The abstract attributes include abstract states of the robots (A, B), the part C, and the tool Z. In the start state, the robots (A, B), the part C, and the tool Z are free. In the target state, the robots (A, B) and the tool Z are free, and the part C is fixed in a predetermined place. Under such conditions, a scene in which an action of holding the part C by the robot A is selected as the first action as a result of abstract action planning is shown. The nodes that are passed through from the start node to the target node correspond to intermediate states.

In a case where a state space of a task can be represented by such a graph, the symbolic planner 3 may be configured to select the next state (that is, a node to be passed through next) when the current state and a target state are given. Selecting the next state is equivalent to selecting an abstract action to be executed in the current state. For this reason, selecting the next state may be treated synonymously with selecting an abstract action to be adopted. The symbolic planner 3 can set a start state to the initial value of the current state and repeatedly performs selection of the next state and a node transition until a target state is selected as the next state, whereby it is possible to search for a path from a start node to a target node in the graph to generate an abstract action sequence.

Candidates for the selectable next state (adoptable abstract action) may be appropriately given according to the configuration of the robot device R, conditions of an object, and the like. However, there is a possibility that some of the given candidates will be logically inexecutable depending on the state at the time of selection (the state that is set as the current state). Even when they are logically executable, adopting the action leads to a possibility that the target state cannot be reached (a dead end is reached) or the same state is repeatedly passed through (looping). Consequently, the symbolic planner 3 may be configured to execute a logic check of an abstract action to be adopted before and after a node transition is performed.

As an example, in the case of Fig. 6, when the robot A is configured to be able to hold one article, and the robot A is free, an action of holding the part C by the robot A or an action of holding the tool Z by the robot A is logically executable. On the other hand, when the robot A already holds the part C (or the tool Z), an action of holding the tool Z (or the part C) by the robot A is logically inexecutable. The symbolic planner 3 may be configured to execute such a logic check before a node transition is performed (that is, before the next state to be selected is determined) and to adopt a logically executable action based on the results of the execution. The content of such a logic check before the transition may be defined as a rule.

In a case where there is no logically executable action in a state corresponding to a target node reached as a result of the selection of a node (that is, abstract attributes realized as a result of the execution of a logically executable abstract action), the target node is a dead end. Alternatively, in a case where the abstract attributes of the target node are the same as abstract attributes of an intermediate node passed through from the start node to the target node, the selected path is looped. The symbolic planner 3 may be configured to avoid a dead end and a loop by holding information on the nodes passed through from the start node to the target node and executing such a logic check after the node transition is performed. In a case where a dead end or a loop is reached, the symbolic planner 3 may be configured to repeat processing for canceling the adoption of the corresponding abstract action and returning to the previous state (node) to determine an abstract action to be adopted.

In a case where there are plurality candidates for an abstract action that can be adopted, the symbolic planner 3 may appropriately select an abstract action to be adopted from among the plurality of candidates. In the present embodiment, the symbolic planner 3 can determine an abstract action to be adopted from among the plurality of candidates by using the trained cost estimation model 4. As an example, the control part 11 performs setting of the trained cost estimation model 4 with reference to the learning result data 125. The control part 11 inputs information indicating each candidate to the input layer 41 and executes forward propagation arithmetic operation of the trained cost estimation model 4. Thereby, the control part 11 can obtain a cost estimation result for each candidate from the output layer 45.

Candidates for adoptable abstract actions may be designated directly, or may be designated by combining candidates for the current state and the next state. Candidates for which the cost is estimated may be narrowed down to logically executable abstract actions that are specified by the results of the logic check before the transition. In a case where information other than the information indicating each candidate is considered for cost estimation, the input layer 41 may be configured to further receive an input of the other information. Other information includes information such as specifications of the robot device R, attributes related to an environment in which a task is performed (for example, the arrangement of objects, specifications, restrictions of a workspace, and the like), the type of task, the difficulty of the task, a list of abstract actions from the current state to the target state, and a movement time required from the current state to the target state. Other information may be acquired in step S101 mentioned above as at least a portion of the task information 121.

The control part 11 may select an abstract action to be adopted from among a plurality of candidates so as to optimize a cost, based on a cost estimation result for each candidate obtained by the trained cost estimation model 4. In one example, optimizing a cost may be configured by selecting an abstract action with the lowest cost. In another example, optimizing a cost may be configured by selecting an abstract action with a cost less than a threshold value. Thereby, in step S 102, the control part 11 can generate an abstract action sequence so that a cost estimated by the trained cost estimation model 4 is optimized, by using the symbolic planner 3. When the abstract action sequence is generated, the control part 11 causes the processing to proceed to the next step S103.

### (Step S103 and Step S104)

Based on Fig. 5, in step S103, the control part 11 operates as the interface processing part 117, and outputs a list of abstract actions included in the abstract action sequence generated using the symbolic planner 3 to a user. In step S104, the control part 11 receives the user's feedback on the output list of abstract actions. An output destination of the list, an output format, and a feedback format may be appropriately selected according to the embodiment.

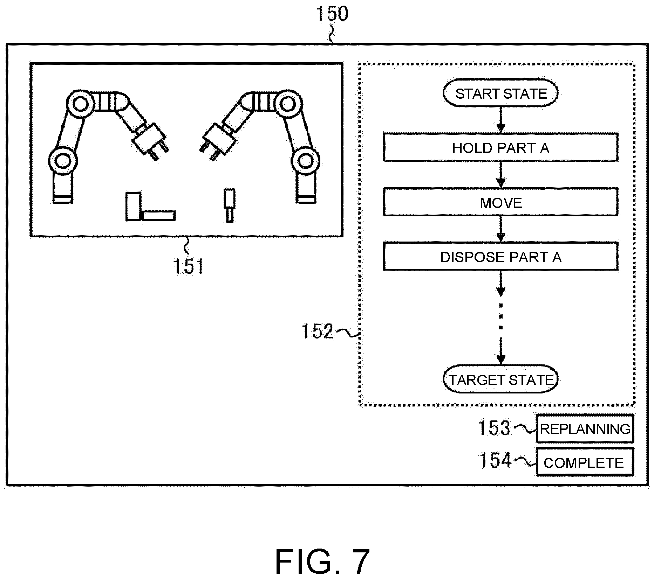

Fig. 7 schematically illustrates an example of an output mode of an abstract action sequence (a list of abstract actions) according to the present embodiment. An output screen 150 illustrated in Fig. 7 includes a first region 151 for displaying the state of the environment of a task (for example, the robot device R and an object) when each abstract action is executed, a second region 152 for displaying the list of the abstract actions, a first button 153 for executing replanning of the abstract action sequence, and a second button 154 for completing the reception of a feedback. The user's feedback may be obtained by operating a graphical user interface (GUI) on the list of the abstract actions displayed in the second region 152. The user's feedback may be constituted by, for example, change, modification, rearrangement, deletion, addition, rejection, acceptance, and the like of the abstract actions. The output screen 150 may be displayed on the output device 15. Accordingly, the user's feedback may be received through the input device 14. After receiving the feedback, the control part 11 causes the processing to proceed to the next step S105.

### (Step S105)

Returning back to Fig. 5, in step S 105, the control part 11 determines a branch destination of the processing in accordance with the user's feedback in step S104. When replanning of the abstract action sequence is selected (for example, the first button 153 is operated) in the user's feedback, the control part 11 causes the processing to return to step S102 to execute the processing from step S102 again. Thereby, the control part 11 replans the abstract action sequence. The symbolic planner 3 may be appropriately configured to generate an abstract action sequence that is at least partially different from the abstract action sequence generated before the replanning by a method such as adopting a different abstract action at the time of the replanning. On the other hand, when replanning of the abstract action sequence is not selected in the user's feedback, the control part 11 causes the processing to proceed to the next step S106.

### (Step S106 and Step S107)

In step S106, the control part 11 operates as the movement generation part 113, and specifies an abstract action for which the corresponding action sequence is not generated and of which the order of execution is earliest among the abstract actions included in the abstract action sequence. The control part 11 converts the specified target abstract action into a movement sequence by using the motion planner 5. The movement sequence may be appropriately configured to include one or more physical movements so that the target abstract action can be achieved. In step S107, the control part 11 determines whether the generated movement sequence is physically executable in the real environment by the robot device R.

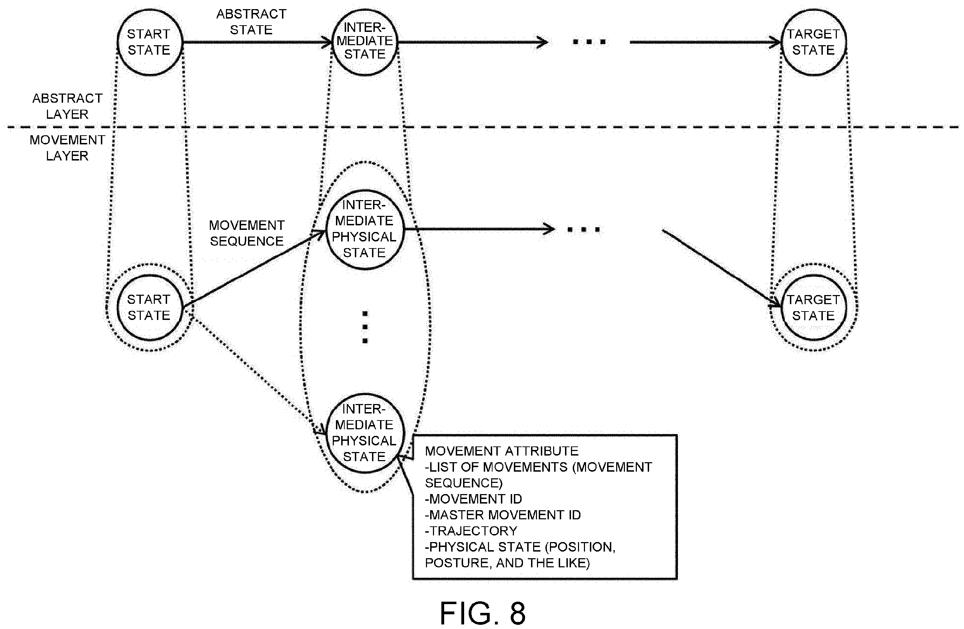

Fig. 8 schematically illustrates an example of a process of generating a movement sequence using the motion planner 5 according to the present embodiment. A state space of a task at a physical stage may be expressed by a graph including edges corresponding to an action sequence and nodes corresponding to action attributes including a target physical state to be changed by the execution of the action sequence. That is, the state space involved in the motion planner 5 may be constituted by a set of movement (physical) attributes that change by a physical movement. The nodes at the physical stage may be obtained corresponding to the nodes at the abstract stage.

The movement attributes of each node may include information on a movement sequence (movement list) for reaching the physical state, in addition to the physical states of the robot device R and an object at the corresponding point in time. As illustrated in Fig. 8, the information on the movement sequence may include, for example, identification information (movement ID) of each movement, identification information (parent movement ID) of a movement (parent movement) executed before each action, instruction information (for example, a control amount such as a trajectory) for giving an instruction for each movement to the robot device R, and the like. The movement ID and the parent movement ID may be used to specify the order of execution of each movement. A physical state in a start state may be designated in accordance with abstract attributes of the start state by the task information 121. Information on the movement sequence in the start state may be empty. A state space at an abstract stage may be expressed as an "abstract layer", and a state space at a physical stage may be expressed as a "movement layer". The processing of step S102 may be expressed as action plan generation processing in the abstract layer, and the processing of step S106 may be expressed as movement plan generation processing in the movement layer.

The motion planner 5 may be configured to generate a movement sequence for performing an abstract action to be adopted according to a predetermined rule when the current physical state and the abstract action are given. A conversion rule for converting an abstract action into a movement sequence may be appropriately set according to the embodiment. The motion planner 5 may set the physical state in the start stage for an initial value of the current physical state. After the adoption of the generated action sequence is determined, the motion planner 5 can update the current physical state by setting the physical state (that is, the physical state of the node after transition), which is realized by executing the movement sequence determined to be adopted, as the current physical state.

Further, the motion planner 5 may be configured to determine whether the robot device R can physically execute the target movement sequence in the real environment by physically simulating the execution of the target movement sequence in the real environment. Information (not illustrated) for reproducing the real environment such as computer aided design (CAD) information may be used for the simulation. The information may be held in any storage region such as the storage part 12, the storage medium 91, or an external storage device.

In a case where reference information other than the current physical state and the abstract action is used for at least one of the movement sequence generation and simulation, the motion planner 5 may be configured to further receive an input of the reference information. The reference information may include information such as specifications of the robot device R, attributes related to an environment in which a task is performed (for example, the arrangement of objects, specifications, restrictions of a workspace, and the like), and the type of task. The reference information may be acquired as at least a portion of the task information 121 in step S101 mentioned above.

As illustrated in Fig. 8, a plurality of different candidates for a movement sequence can be generated for an abstract action (that is, in the movement layer, a plurality of nodes corresponding to one node in the abstract layer can be given). In this case, the control part 11 may appropriately select an action sequence executable in the real environment from among the plurality of candidates. When it is determined that all of the candidates are inexecutable in the real environment, the control part 11 may conclude that the generated movement sequence is physically inexecutable in the real environment by the robot device R as a determination result of step S107. When the generation of the movement sequence and the determination of the executability of the generated movement sequence in the real environment are completed using the motion planner 5, the control part 11 causes the processing to proceed to the next step S108.

### (Step S108)

Returning back to Fig. 5, in step S 108, the control part 11 determines a branch destination of the processing in accordance with a determination result of step S107. When it is determined that the generated movement sequence is physically inexecutable (in a case where there are a plurality of candidates, all of the candidates are inexecutable), the control part 11 discards an abstract action sequence after an abstract action corresponding to the movement sequence determined to be physically inexecutable. The control part 11 causes the processing to return to step S102 and executes the processing again from step S 102. Thereby, the control part 11 generates a new abstract action sequence after the abstract action corresponding to the movement sequence determined to be physically inexecutable. That is, in a case where a movement sequence that is executable in the action layer is not obtained, the control part 11 returns to the abstract layer to replan the abstract action sequence. As long as a target abstract action corresponding to the movement sequence determined to be inexecutable is included, the range of discarding may not be limited to those after the target abstract action. As another example, the control part 11 may discard abstract actions of which the order of execution is earlier than the target abstract action and execute the processing from step S102 again to generate a new abstract action sequence for the discarded range. On the other hand, in a case where it is determined that the generated action sequence is physically executable, the control part 11 causes the processing to proceed to the next step S109.

### (Step S109)

In step S109, the control part 11 determines whether the generation of a movement sequence executable in the real environment has been successful for all of the abstract actions included in the abstract action sequence generated by the symbolic planner 3. The successful generation of an action sequence executable in the real environment for all of the abstract actions included in the generated abstract action sequence is equivalent to the completion of generation of a movement plan.

In a case where an abstract action for which no movement sequence has been generated remains (that is, the generation of the movement plan has not been completed), the control part 11 causes the processing to return to step S 106. The control part 11 executes the processing of step S106 and the subsequent steps for the abstract action adopted as an abstract action to be executed next to the target abstract action for which the generation of a movement sequence executable in the real environment has been successful. Thereby, the control part 11 converts the abstract actions included in the abstract action sequence into a movement sequence in order of execution and determines the executability of the obtained movement sequence in the real environment by using the motion planner 5. By repeating the processing of steps S 106 to step S108 until there are no more abstract actions for which no movement sequences have been generated, the control part 11 can generate a movement group which includes one or more movement sequences and in which all of the included movement sequences are determined to be physically executable so as to reach a target state from a start state. In a case where the generation of a movement plan has been completed, the control part 11 causes the processing to proceed to the next step S110.

### (Step S110)

At step S110, the control part 11 operates as the output part 114 and outputs the movement group (movement plan) generated using the motion planner 5.

The output destination and output mode of the movement group may be appropriately determined according to the embodiment. In one example, the control part 11 may output the generated movement group to the output device 15 as it is. The output movement group may be appropriately used to control the robot device R. In another example, outputting the movement group may include controlling the movement of the robot device R by giving an instruction indicating the movement group to the robot device R. In a case where the robot device R includes a controller (not illustrated) and the movement planning device 1 is connected to the controller, the control part 11 may output instruction information indicating the movement group to the controller to indirectly control the movement of the robot device R. Alternatively, in a case where the movement planning device 1 operates as a controller of the robot device R, the control part 11 may directly control the movement of the robot device R based on the generated movement group. Thereby, it is possible to construct the movement planning device 1 that controls the movement of the robot device R in accordance with the generated movement plan.

When the output of the movement group is completed, the control part 11 terminates the processing procedure related to the movement plan according to the present movement example. The movement planning device 1 may be configured to repeatedly execute a series of information processing from steps S101 to S110 at any timing.

### (2) Machine Learning of Cost Estimation Model

Fig. 9 is a flowchart illustrating an example of a processing procedure related to machine learning of the cost estimation model 4 which is performed by the movement planning device 1 according to the present embodiment. However, the processing procedure related to machine learning to be described below is merely an example, and each step may be changed as much as possible. With respect to the following processing procedures related to machine learning, steps may be appropriately omitted, replaced, or added according to the embodiment.

### (Step S201)

In step S201, the control part 11 operates as the data acquisition part 115 and acquires the plurality of learning data sets 60 each constituted by a combination of the training sample 61 and the correct answer labels 62.

Each learning data set 60 may be generated appropriately. As an example of a generation method, first, the training sample 61 representing an abstract action for training is generated. The training sample 61 may be appropriately generated manually. Alternatively, the training sample 61 may be obtained from an abstract action sequence generated by executing (or attempting) the processing of the symbolic planner 3. In a case where the cost estimation model 4 is configured to further receive an input of information other than information indicating candidates for an abstract action, the training sample 61 may be appropriately generated to further include other information for training.

Next, corresponding to the generated training sample 61, the correct answer label 62 indicating a true value of the cost of the abstract action for training is generated. A cost evaluation index may be selected appropriately. In one example, the cost evaluation index may include at least one of a movement time and a drive amount. In this case, the correct answer label 62 may be configured to indicate a true value of a cost calculated in accordance with at least one of a period of time required to execute a movement sequence generated by the motion planner 5 for the abstract action for training and a drive amount of the robot device R in executing the movement sequence. The correct answer label 62 may be generated from a result obtained by executing or simulating the movement sequence generated by the motion planner 5. The true value of the cost may be appropriately set such that the cost is evaluated to be high as the movement time/the drive amount increases, and the cost is evaluated to be low as the movement time/the drive amount decreases.

In another example, the cost evaluation index may include a failure rate (success rate) of a movement plan. In this case, the correct answer label 62 may be configured to indicate a true value of a cost calculated in accordance with a probability with which the movement sequence generated by the motion planner 5 for the abstract action for training is determined to be physically inexecutable. The correct answer label 62 may be generated from a result of execution of the processing of the motion planner 5 for the abstract action for training. The true value of the cost may be appropriately set such that the cost decreases as the movement plan is successful (in other words, as a movement sequence physically executable in the real environment can be generated, or the like), and the cost increases as the movement plan is not successful.

In still another example, the cost evaluation index may include a user's feedback. In this case, the correct answer label 62 may be configured to indicate a true value of a cost calculated in response to the user's feedback for the abstract action for training. The user's feedback may be obtained at any timing and in any format, and the correct answer label 62 may be appropriately generated from a result of the obtained feedback. In the present embodiment, the user's feedback for the abstract action sequence generated by the symbolic planner 3 can be obtained by the processing of step S 104. The correct answer label 62 may be generated from the feedback result in step S 104. Thereby, the learning data set 60 may be obtained from the feedback result in step S 104. The true value of the cost may be appropriately set such that the cost is evaluated to be higher as the true value is subjected to at least one of change, modification, rearrangement, deletion, and rejection in the feedback, and is evaluated to be lower as the true value is subjected to any one of maintenance (used as it is without change or the like) or acceptance.

The cost may be calculated using a plurality of evaluation indices (for example, two or more evaluation indices selected from among the above-mentioned four evaluation indices). The true value of the cost may be manually determined or modified. After the correct answer label 62 is generated, the generated correct answer label 62 is associated with the training sample 61. Thereby, each learning data set 60 can be generated.

Each learning data set 60 may be automatically generated by a computer operation, or may be manually generated by at least partially including an operator's operation. Each generated learning data set 60 may be stored in the storage part 12. Each learning data set 60 may be generated by the movement planning device 1 or may be generated by a computer other than the movement planning device 1. In a case where the movement planning device 1 generates each learning data set 60, the control part 11 may acquire each learning data set 60 by executing the above-mentioned generation processing automatically or manually by the operator's operation through the input device 14. On the other hand, in a case where another computer generates each learning data set 60, the control part 11 may acquire each learning data set 60 generated by the other computer, for example, via a network, the storage medium 91, or the like. Some of the plurality of learning data sets 60 may be generated by the movement planning device 1, and the others may be generated by one or a plurality of other computers.

The number of learning data sets 60 to be acquired is not particularly limited, and may be appropriately determined according to the embodiment so that machine learning can be performed. When the plurality of learning data sets 60 are acquired, the control part 11 causes the processing to proceed to the next step S202.

### (Step S202)

In step S202, the control part 11 operates as the learning processing part 116 and performs machine learning of the cost estimation model 4 by using the plurality of learning data sets 60 acquired.

As an example of machine learning processing, first, the control part 11 prepares a neural network that constitutes the cost estimation model 4 to be subjected to the machine learning processing. The structure of the neural network, initial values of weights of couplings between neurons, and initial values of threshold values of the neurons may be given by a template or given by an operator's input. In a case where relearning is performed, the control part 11 may prepare the cost estimation model 4 based on learning result data obtained by the past machine learning.

Next, for each learning data set 60, the control part 11 trains the cost estimation model 4 so that an estimated value of a cost for the abstract action for training indicated by the training sample 61 conforms to the true value indicated by the corresponding correct answer label 62. Stochastic gradient descent, mini-batch gradient descent, or the like may be used for the training processing.

As an example of the training processing, the control part 11 inputs the training sample 61 of each learning data set 60 to the input layer 41 and executes forward propagation arithmetic operation processing of the cost estimation model 4. As a result of the arithmetic operation, the control part 11 acquires an estimated value of a cost for the abstract action for training from the output layer 45. The control part 11 calculates an error between the obtained estimated value and the true value indicated by the corresponding correct answer label 62 for each learning data set 60. A loss function may be used to calculate the error (loss). The type of loss function used to calculate the error may be appropriately selected according to the embodiment.

Next, the control part 11 calculates a gradient of the calculated error. The control part 11 sequentially calculates errors of values of arithmetic operation parameters of the cost estimation model 4 from an output side by using the gradient of the calculated error by a back propagation method. The control part 11 updates the values of the arithmetic operation parameters of the cost estimation model 4 based on the calculated errors. The extent to which the value of each arithmetic operation parameter is updated may be adjusted by a learning rate. The learning rate may be designated by the operator or may be given as a set value within a program.

The control part 11 adjusts the values of the arithmetic operation parameters of the cost estimation model 4 so that the sum of errors to be calculated is reduced for each learning data set 60 through the series of updating processing described above. For example, the control part 11 may repeatedly adjust the values of the arithmetic operation parameters of the cost estimation model 4 a specified number of times through the above-mentioned series of updating processing until a predetermined condition, such as the sum of calculated errors being equal to or less than a threshold value, is satisfied.

As a result of the machine learning, the control part 11 can generate a trained cost estimation model 4 that has acquired an ability to estimate the cost of an abstract action. When the machine learning processing of the cost estimation model 4 is completed, the control part 11 causes the processing to proceed to the next step S203.

### (Step S203)

In step S203, the control part 11 generates information on the generated trained cost estimation model 4 as the learning result data 125. The control part 11 stores the generated learning result data 125 in a predetermined storage region.

The predetermined storage region may be, for example, the RAM in the control part 11, the storage part 12, an external storage device, a storage medium, or a combination thereof. The storage medium may be, for example, a CD, a DVD, or the like, and the control part 11 may store the learning result data 125 in the storage medium via the drive 16. The external storage device may be, for example, a data server such as a network attached storage (NAS). In this case, the control part 11 may store the learning result data 125 in the data server via a network. In addition, the external storage device may be, for example, an externally attached storage device connected to the movement planning device 1 via the external interface 13.

When the storage of the learning result data 125 is completed, the control part 11 terminates the processing procedure related to machine learning of the cost estimation model 4 according to the present movement example. The generation of the trained cost estimation model 4 through the processing of steps S201 to S203 described above may be executed at any timing before or after the movement planning device 1 is started to be operated for movement planning. The control part 11 may update or newly generate the learning result data 125 by regularly or irregularly repeating the processing of steps S201 to S203 described above. During this repetition, the control part 11 may appropriately execute change, modification, addition, deletion, and the like with respect to at least some of the learning data sets 60 used for machine learning by using the results of operating the movement planning device 1 for movement planning. Thereby, the trained cost estimation model 4 may be updated.

### [Features]

As described above, the movement planning device 1 according to the present embodiment divides a process of generating a movement plan for the robot device R into two stages, that is, an abstract stage (step S 102) using the symbolic planner 3 and a physical stage (step S106 and step S107) using the motion planner 5 and generates a movement plan while exchanging between the two planners (3, 5). In the processing of step S102, an action plan for performing a task can be generated by simplifying the environment and conditions of the task to an abstract level. For this reason, even for a complicated task, it is possible to generate an abstract action plan (abstract action sequence) at high speed with a relatively low memory load. In the processing of steps S106 and S107, it is possible to efficiently generate a movement plan within the range of the action plan of the symbolic planner 3 while ensuring executability in the real environment. Thus, according to the present embodiment, it is possible to generate a movement plan for the robot device R at high speed with a relatively low memory load even for a complicated task, while ensuring executability in the real environment.

According to the present embodiment, the trained cost estimation model 4 is used in the processing of step S102, and thus it is possible to generate a desired abstract action plan based on costs. Thereby, it is possible to make it easier to generate a more appropriate movement plan. In one example, by using at least one of a movement time and a drive amount of the robot device R as a cost evaluation index, it is possible to make it easier to generate an appropriate movement plan with respect to at least one of the movement time and the drive amount of the robot device R. In another example, by using a failure rate of the movement plan using the motion planner 5 as a cost evaluation index, it is possible to reduce the failure rate of the movement plan using the motion planner 5 (in the processing of step S108, a possibility that it is determined that the processing returns to step S102) with respect to the abstract action sequence generated by the symbolic planner 3. That is, it is possible to make it easier to generate an abstract action plan highly executable in the real environment by the symbolic planner 3, thereby shortening a processing time required to obtain a final movement plan. In another example, by using a user's feedback as a cost evaluation index, it is possible to make it easier to generate a more appropriate movement plan in response to the feedback.

In a case where the user's feedback is used as the cost evaluation index, the feedback may be obtained for the movement plan generated by the motion planner 5. In one example, the movement planning device 1 may receive the user's feedback for the generated movement plan after the processing of step S110. However, the movement sequence included in the movement plan generated by the motion planner 5 is defined by a physical quantity associated with the mechanical driving of the robot device R. For this reason, the generated movement plan has a large amount of information and is less interpretable for the user (person). On the other hand, in the present embodiment, the user's feedback may be acquired for the abstract action sequence through the processing of step S 104, and the learning data set 60 used for the machine learning in step S202 may be obtained from the result of the feedback. The abstract actions included in the action plan generated by the symbolic planner 3 may be defined by, for example, a set of movements that can be represented by symbols such as words, and has a smaller amount of information and is more interpretable for the user as compared to the movement sequence defined by the physical quantity. Thus, according to the present embodiment, it is possible to reduce consumption of resources (for example, a display) for outputting a plan generated by the planner to the user and to make it easier to obtain the user's feedback. Thereby, it is possible to make it easier to generate and improve the trained cost estimation model 4 for generating a more appropriate movement plan.

In the present embodiment, the movement planning device 1 is configured to be able to execute the processing of steps S201 to S203 described above. Thereby, according to the present embodiment, the movement planning device 1 can generate a trained cost estimation model 4 for generating a more appropriate movement plan. It is possible to achieve an improvement in the performance of the cost estimation model 4 while operating the movement planning device 1.

A structural relationship between the symbolic planner 3 and the cost estimation model 4 may be appropriately set according to the embodiment. In one example, arithmetic operation parameters that can be adjusted by machine learning are provided in a portion of the symbolic planner 3, and the portion may be treated as the cost estimation model 4. In another example, a machine learning model may be prepared independently from the configuration of the symbolic planner 3, and the prepared machine learning model may be used as the cost estimation model 4.

The task set in the machine learning in step S202 (the task treated by the training sample 61) may not necessarily match the task given during the operation of the movement plan (the task treated in step S102). That is, the cost estimation model 4 for which an ability to estimate costs for a certain task has been trained may be used to estimate the cost of an abstract action for another task.

### § 4 Modification Example

Although the embodiment of the present invention has been described above in detail, the above description is merely an example of the present invention in all respects. It is needless to say that various improvement or modifications can be made without departing from the scope of the invention. For example, the following changes can be made. Hereinafter, the same reference numerals will be used for the same components as those in the above-described embodiment, and description will be appropriately omitted with respect to the same respects as in the above-described embodiment. The following modification example can be combined appropriately.

<4.1>
In the above-described embodiment, an estimated value of a cost obtained by the cost estimation model 4 is used as an index for determining an abstract action to be adopted from a plurality of candidates. That is, the estimated value of the cost is treated as an index for evaluating the degree to which a transition from one node to the next node is recommended in the graph search of an abstract layer. In the above-described embodiment, the estimated value of the cost obtained by the cost estimation model 4 is referred to at the time of selecting the next node. However, a timing at which the estimated value of the cost is referred to may not be limited to such an example. As another example, the control part 11 may determine whether to adopt an obtained path with reference to the estimated value of the cost after reaching a target node.

Further, in the above-described embodiment, when a failure rate of a movement plan is used as an index of a cost, an estimated value of a cost using the trained cost estimation model 4 is equivalent to a result of estimation of the processing result of step S107 of the motion planner 5. For this reason, the trained cost estimation model 4 that has acquired an ability to estimate a cost using the failure rate of the movement plan by the motion planner 5 as an index may be treated as a movement estimator that simulates the movement of the motion planner 5.

Fig. 10 schematically illustrates an example of another usage mode of the cost estimation model 4. In the present modification example, in step S 102, the cost estimation model 4 may receive a portion or the entirety of the abstract action sequence generated by the symbolic planner 3, and may output a result, which is obtained by estimating whether a movement plan of the motion planner 5 for the portion or the entirety of the abstract action sequence has been successful, as an estimated value of a cost. The control part 11 may determine a possibility that the movement plan of the motion planner 5 will be successful, based on the obtained estimated value of the cost. In a case where there is a low probability that the movement plan will be successful (for example, a threshold value or less), the control part 11 may execute replanning of an abstract action sequence using the symbolic planner 3. The cost estimation model 4 is not configured to be able to execute all processing of the motion planner 5. For this reason, the movement of the cost estimation model 4 is lightweight compared to that of the motion planner 5. Thus, according to the present modification example, it is possible to determine whether to execute replanning of the abstract action sequence by the symbolic planner 3 with a light movement.

In the present modification example, the cost estimation model 4 may be configured to further output the degree of reliability (certainty factor) of an estimated value of a cost corresponding to a failure rate of a movement plan in addition to the estimated value of the cost. Alternatively, the certainty factor may be calculated from the estimated value of the cost. As an example, in a case where the estimated value of the cost is given between 0 and 1, the value of the certainty factor may be calculated such that the certainty factor becomes larger as the estimated value of the cost is closer to 0 or 1, and the certainty factor becomes smaller as the estimated value of the cost is closer to 0.5.

In this case, the control part 11 may use a small certainty factor (for example, a threshold value or less) as a trigger for executing the processing of the motion planner 5. That is, in step S 102, when the certainty factor is evaluated to be low, the control part 11 may stop the processing for generating an abstract action sequence by the symbolic planner 3 and execute the processing of the motion planner 5 (the processing of steps S 106 and S 107) on a portion of the abstract action sequence obtained by the processing so far. In a case where the generation of a movement plan by the motion planner 5 has been successful, the control part 11 may restart the processing for generating an abstract action sequence by the symbolic planner 3. On the other hand, in a case where the generation of a movement plan by the motion planner 5 has not been successful, the control part 11 may discard a portion of the abstract action sequence obtained by the processing so far and execute replanning of an abstract action sequence by the symbolic planner 3. Optimizing the cost estimated by the cost estimation model 4 may include simulating such a movement of the motion planner 5.

<4.2>
In the above-described embodiment, the movement planning device 1 generates a movement plan by executing the processing of the motion planner 5 after the symbolic planner 3 completes the generation of an abstract action sequence. However, a timing when data is exchanged between the symbolic planner 3 and the motion planner 5 (the order of the processing of steps S 102, S 106, and S 107) may not be limited to such an example. In another example, the movement planning device 1 may execute the processing of the motion planner 5 at the stage where the symbolic planner 3 has generated a portion of the abstract action sequence, and generate a movement plan for the portion.

<4.3>
In the above-described embodiment, the cost estimation model 4 is constituted by a fully connected neural network. However, the configuration of the neural network constituting the cost estimation model 4 may not be limited to such an example, and may be appropriately selected according to the embodiment. As another example, each neuron may be connected to a specific neuron in an adjacent layer, or may be connected to a neuron in a layer other than the adjacent layer. A coupling relationship between neurons may be appropriately determined according to the embodiment. The neural network that constitutes the cost estimation model 4 may include other types of layers, such as convolution layers, pooling layers, normalization layers, dropout layers, and the like. The cost estimation model 4 may be constituted by other types of neural networks such as a convolutional neural network, a recursive neural network, a graph neural network, and the like.

In addition, the type of machine learning model used for the cost estimation model 4 may not be limited to the neural network, and may be appropriately selected according to the embodiment. A machine learning method may be appropriately selected according to the type of machine learning model. As another example, a machine learning model such as a support vector machine or a decision tree model may be used for the cost estimation model 4.

<4.4>
In the above-described embodiment, when a user's feedback is obtained by another method, or when the user's feedback is not adopted as a cost evaluation index, the processing of steps S103 to S105 may be omitted from the processing procedure of the movement planning device 1. In a case where the processing of steps S103 to S105 is omitted, the interface processing part 117 may be omitted from the software configuration of the movement planning device 1.

In the above-described embodiment, the generation or releaming of the trained cost estimation model 4 through the processing of steps S201 to S203 may be executed by a computer other than the movement planning device 1. In this case, the data acquisition part 115 and the learning processing part 116 may be omitted from the software configuration of the movement planning device 1. The processing of steps S201 to S203 may be omitted from the processing procedure of the movement planning device 1. The trained cost estimation model 4 (learning result data 125) generated by another computer may be provided to the movement planning device 1 at any timing via a network, the storage medium 91, or the like.

In the processing of step S102 in the above-described embodiment, the movement planning device 1 may select an abstract action to be adopted from among a plurality of candidates without using the cost estimation model 4. In this case, the cost estimation model 4 may be omitted.

### [Reference Signs List]

1 Movement planning device
11 Control part
12 Storage part
13 External interface
14 Input device
15 Output device
16 Drive
81 Movement planning program
91 Storage medium
111 Information acquisition part
112 Action generation part
113 Movement generation part
114 Output part
115 Data acquisition part
116 Learning processing part
117 Interface processing part
121 Task information
125 Learning result data
3 Symbolic planner
4 Cost estimation model
41 Input layer
43 Intermediate (hidden) layer
45 Output layer
5 Motion planner
60 Learning data set
61 Training sample
62 Correct answer label
R Robot device

## Claims

1. A movement planning device comprising:
an information acquisition part configured to acquire task information including information on a start state and a target state of a task given to a robot device;
an action generation part configured to generate an abstract action sequence including one or more abstract actions arranged in an order of execution so as to reach the target state from the start state based on the task information by using a symbolic planner;
a movement generation part configured to generate a movement sequence including one or more physical actions for performing the abstract actions included in the abstract action sequence in the order of execution and to determine whether the generated movement sequence is physically executable in a real environment by the robot device by using a motion planner; and
an output part configured to output a movement group which includes one or more movement sequences generated using the motion planner and in which all of the movement sequences that are included are determined to be physically executable,
wherein, in a case where it is determined that the movement sequences are physically inexecutable, the movement generation part is configured to discard an abstract movement sequence after the abstract action corresponding to the movement sequence determined to be physically inexecutable, and the action generation part is configured to generate a new abstract action sequence after the action by using the symbolic planner.

2. The movement planning device according to claim 1, wherein the symbolic planner includes a cost estimation model trained by machine learning to estimate a cost of an abstract action, and
the action generation part is further configured to generate the abstract action sequence so that the cost estimated by the cost estimation model is optimized, by using the symbolic planner.

3. The movement planning device according to claim 2, further comprising:
a data acquisition part configured to acquire a plurality of learning data sets each constituted by a combination of a training sample indicating an abstract action for training and a correct answer label indicating a true value of a cost of the abstract action for training; and
a learning processing part configured to perform machine learning of the cost estimation model by using the plurality of learning data sets obtained, wherein the machine learning is configured by training the cost estimation model so that an estimated value of a cost for the abstract action for training indicated by the training sample conforms to a true value indicated by the correct answer label for each learning data set.

4. The movement planning device according to claim 3, wherein the correct answer label is configured to indicate a true value of a cost calculated in accordance with at least one of a period of time required to execute the movement sequence generated by the motion planner for the abstract action for training, and a drive amount of the robot device in executing the movement sequence.

5. The movement planning device according to claim 3 or 4, wherein the correct answer label is configured to indicate a true value of a cost calculated in accordance with a probability that the movement sequence generated by the motion planner for the abstract action for training is determined to be physically inexecutable.

6. The movement planning device according to any one of claims 3 to 5,
wherein the correct answer label is configured to indicate a true value of a cost calculated in accordance with a user's feedback for the abstract action for training.

7. The movement planning device according to claim 6, further comprising an interface processing part configured to output a list of abstract actions included in an abstract action sequence generated using the symbolic planner to the user and to receive the user's feedback for the output list of the abstract actions,
wherein the data acquisition part is further configured to acquire the learning data set from a result of the user's feedback for the list of the abstract actions.

8. The movement planning device according to any one of claims 1 to 7, wherein a state space of the task is represented by a graph including edges corresponding to abstract actions and nodes corresponding to abstract attributes as targets to be changed by execution of the abstract actions, and
the symbolic planner is configured to generate the abstract action sequence by searching for a path from a start node corresponding to a start state to a target node corresponding to a target state in the graph.

9. The movement planning device according to any one of claims 1 to 8,
wherein outputting the movement group includes controlling a movement of the robot device by giving an instruction indicating the movement group to the robot device.

10. The movement planning device according to any one of claims 1 to 9,
wherein the robot device includes one or more robot hands, and
the task is assembling work for a product constituted by one or more parts.

11. A movement planning method comprising:
causing a computer to execute steps as follows, including:
acquiring task information including information on a start state and a target state of a task given to a robot device,
generating an abstract action sequence including one or more abstract actions arranged in an order of execution so as to reach the target state from the start state based on the task information by using a symbolic planner,
generating a movement sequence including one or more physical actions for performing the abstract actions included in the abstract action sequence in the order of execution by using a motion planner,
determining whether the generated movement sequence is physically executable in a real environment by the robot device, and
outputting a movement group which includes one or more movement sequences generated using the motion planner and in which all of the movement sequences that are included are determined to be physically executable,
wherein in the determining, in a case where it is determined that the movement sequence is physically inexecutable, the computer discards an abstract movement sequence after the abstract action corresponding to the movement sequence determined to be physically inexecutable, and returns to the generating of the abstract action sequence to generate a new abstract action sequence after the action by using the symbolic planner.

12. A movement planning program causing a computer to execute steps as follows, including
acquiring task information including information on a start state and a target state of a task given to a robot device,
generating an abstract action sequence including one or more abstract actions arranged in an order of execution so as to reach the target state from the start state based on the task information by using a symbolic planner,
generating a movement sequence including one or more physical actions for performing the abstract actions included in the abstract action sequence in the order of execution by using a motion planner,
determining whether the generated movement sequence is physically executable in a real environment by the robot device, and
outputting a movement group which includes one or more movement sequences generated using the motion planner and in which all of the movement sequences that are included are determined to be physically executable,
wherein, in the determining, in a case where it is determined that the movement sequence is physically inexecutable, the computer discards an abstract movement sequence after the abstract action corresponding to the movement sequence determined to be physically inexecutable, and returns to the generating of the abstract action sequence to generate a new abstract action sequence after the action by using the symbolic planner.
